# EUROPÄISCHE PATENTSCHRIFT

(11) **EP 0 581 247 B1**
(45) Veröffentlichungstag und Bekanntmachung des Hinweises auf die Patenterteilung: **04.06.1997**
(21) Anmeldenummer: 93112003.4
(22) Anmeldetag: 27.07.1993
(51) Int. Cl.: B25B 23/04, E04D 15/04, B23P 19/00

(54) **Setzvorrichtung für Halteeinrichtungen**
Setting device for retention elements
Dispositif pour la mise en place des éléments de rétention

(30) Priorität: 27.07.1992 DE 4224800
(43) Veröffentlichungstag der Anmeldung: 02.02.1994
(73) Patentinhaber: IVT H. BLANK, D-59439 Holzwickede (DE)
(72) Erfinder: Hosbach, Johannes, D-59439 Holzwickede (DE)
(74) Vertreter: Marx, Lothar, Dr.

(56) Entgegenhaltungen:
- EP-A- 0 292 604
- EP-A- 0 427 120
- WO-A-91/19061
- DE-A- 3 625 586
- DE-U- 8 690 010
- US-A- 5 058 464

## Beschreibung

Die Erfindung betrifft eine elektronisch gesteuerte Setzvorrichtung zum Setzen von Halteeinrichtungen, vorzugsweise von plattenartigen Halteeinrichtungen, insbesondere von Haltetellern, zur Befestigung von Dachabdichtungsbahnen nach dem Oberbegriff des Patentanspruchs 1.

Um Dächer von Bauwerken, insbesondere von großflächigen Bauten, wie z.B. Fabrik- oder Ausstellungshallen, abzudichten, werden Dachabdichtungsbahnen verlegt. Die Dachabdichtungsbahnen bestehen dabei in der Regel aus einer Wärmedämmung und aus einer oder mehreren Schichten von beispielsweise überlappend ausgelegten wasserabweisenden Bahnen, z.B. Dachpappe.

Zur Befestigung derartiger Dachabdichtungen werden Halteeinrichtungen verwendet, die mittels Befestigungseinrichtungen an der Dachoberfläche festgelegt werden. Die Halteeinrichtungen bestehen dabei aus ebenen oder leicht profilierten plattenartigen Scheiben. Diese können ovalrund, viereckig bzw. dreieckig mit abgerundeten Ecken sein. Sie können Versteifungs- und/oder Montagesicken aufweisen und sollten mit mindestens einem Loch versehen sein, durch welches eine Befestigungseinrichtung, z.B. ein Nagel oder eine Schraube oder dergleichen hindurchgeführt werden kann, um die Halteeinrichtung und damit die Dachabdichtungsbahn an dem abzudichtenden Dach festzulegen.

Müssen die Halteeinrichtungen von Hand mit den Befestigungseinrichtungen bzw. Schrauben gesetzt und am Dach befestigt werden, so bedeutet dieses einen äußerst hohen Arbeitsaufwand. Aus diesem Grunde sind Vorrichtungen zum Setzen derartiger Halteeinrichtungen zum Befestigungen von Dachabdichtungsbahnen bekanntgeworden, die den personellen Arbeitsaufwand verringern sollten.

So läßt sich beispielsweise dem DE-U 86 90 010 eine Vorrichtung zum Eindrehen von Schrauben mit Unterlegscheiben entnehmen, die das Setzen der Halteeinrichtungen, im folgenden "Befestigungsteller" genannt, erleichtern soll. Diese Vorrichtung weist eine Mechanik auf, die nicht nur kompliziert und anfällig ist, sondern auch einen sehr hohen Platzbedarf hat. Die Befestigungsteller werden in einem Speicher bzw. Magazin aufbewahrt, der über eine mehrfach abgewinkelte und zudem schräg verlaufende Zuführstrecke mit einer Setzposition verbunden ist. Um einen Befestigungsteller aus dem Speicher auszulösen und in die Setzposition gelangen zu lassen, muß die Bedienungsperson eine Sperrmechanik auslösen, um einen Befestigungsteller in die Setzposition gelangen zu lassen. Dabei fallen nicht selten mehrere Befestigungsteller gleichzeitig heraus und/oder verkeilen sich in der abgewinkelten und zudem schrägen Zuführstrecke der bekannten Vorrichtung.

Gelangt ein Befestigungsteller in die Setzposition, so kann die Bedienungsperson eine in einem Speicher befindliche schraubenartige Befestigungseinrichtung, im folgenden als "Schraube" bezeichnet, auslösen. Diese gelangt über eine weitere Zuführstrecke in den Wirkungsbereich eines Elektroschraubers und kann dann durch ein Loch in dem Befestigungsteller, der sich in der Setzposition befindet, hindurchgedreht werden, womit der Befestigungsteller und damit die Dachabdichtungsbahn am Dach befestigt werden kann.

Diese bekannte Setzvorrichtung ist rein mechanisch gesteuert und in ihrem Funktionsablauf synchronisiert. Sobald die geringsten Unregelmäßigkeiten im Funktionsablauf, z.B. bei der Beförderung eines Befestigungstellers, auftreten, funktioniert die mechanische Synchronisation nicht mehr und die Mechanik verklemmt sich.

Nachteilig ist bei diesem gattungsgemäßen Gerät außerdem, daß durch die platzaufwendige Mechanik die Setzposition in der Bodenplatte der Vorrichtung relativ ungünstig liegt, so daß insbesonde im Randbereich von Dächern, wo die Dachabdichtungsbahnen bei einer Zug- bzw. Sogbelastung durch einen am Dach angreifenden Wind stark belastet sind, entweder ein relativ großer Abstand zwischen dem Dachrand und der zu setzenden Reihe erforderlich ist, oder aber die Befestigungsteller von Hand gesetzt werden müssen.

Außerdem läßt sich die bekannte Vorrichtung kaum oder nur durch aufwendige Umbauarbeiten auf unterschiedliche Schraubenlängen einstellen. Dies ist besonders dann nachteilig, wenn eine undicht gewordene erste Dachabdichtungsbahn mit einer weiteren zweiten neuen Dachabdichtungsbahn abgedeckt werden soll. In einem solchen Fall ist es erforderlich, die Befestigungsteller über eine Strecke von 120 mm oder mehr an dem Dach zu befestigen.

Dabei tritt zusätzlich das Problem auf, daß sich die Eindrehtiefe an der bekannten Vorrichtung nicht einstellen läßt, so daß die Bedienungsperson besondere Erfahrung benötigt, um die Eindrehfunktion rechtzeitig abzustellen. In der Praxis ist dieses jedoch häufig nicht möglich, so daß der Elektroschrauber zu lange betätigt, und der Schraubenkopf vom Schraubenschaft abgedreht wird, wodurch der festzuschraubende Befestigungsteller ohne Halterung lose auf dem Dach aufliegt. Bemerkt die Bedienungsperson diese Fehlfunktion nicht, so ergibt sich damit automatisch eine Schwachstelle im Dach. Bemerkt die Bedienungsperson die Fehlfunktion, so muß sie in unmittelbarer Nähe der abgebrochenen Schraube einen weiteren Befestigungsteller setzen, da die Dachoberfläche in diesem Bereich perforiert ist und von dem zu setzenden Befestigungsteller überdeckt werden muß, um wenigstens die Wahrscheinlichkeit zu erhöhen, daß das Dach in diesem Bereich nicht undicht wird.

Schließlich ist von der Firma EJOT eine Vorrichtung bekannt geworden, die im Prinzip jedoch die gleichen Nachteile aufweist.

Auch aus der EP 0 003 004 B1 ist eine Vorrichtung zum Eindrehen von Schrauben mit Unterlegscheiben bekannt. Auch bei dieser Vorrichtung werden Befestigungsteller und Befestigungsschrauben aus einem Magazin maschinell zugeführt, wobei auch hier über diverse Mechaniken eine Synchronisation der Zuführung und der Befestigung der Befestigungsteller mittels der Schrauben über eine mechanische Wirkverbindung durchgeführt wird. Auch die mit dieser bekannten Vorrichtung verbundene komplizierte und empfindliche Mechanik weist die oben im Zusammehnag mit dem anderen Stand der Technik aufgeführten Nachteile auf.

Auch hier ist die Synchronisation mechanisch und weist die oben bereits aufgeführten Nachteile auf.

Aus der US-A-5,058,464 ist eine Setzvorrichtung zum Setzen von Befestigungstellern zur Befestigung von Dachabdichtungsbahnen auf einer Dachoberfläche gemäß dem Oberbegriff des Patentanspruchs 1 bekannt. Bei dieser Vorrichtung werden aus einem Magazin Befestigungsteller in eine Halteeinrichtung überführt, die über einen pneumatischen Zylinder in eine Position unterhalb der Mündung eines Schraubenzuführkanals für Schrauben bewegt werden kann. Sobald die Halterung mit dem Befestigungsteller in einer Stellung unter dem Schraubenzuführkanal der bekannten Vorrichtung angelangt ist, verschließt ein Abschnitt an der Halterung den Zuführkanal des Magazins und der Abschnitt gibt den Bereich unterhalb des Magazins erst dann wieder frei, wenn die Halterung wiederum angetrieben durch den Pneumatikzylinder unter die Mündung des Magazins geschoben worden ist. Zur Steuerung der gesamten Abläufe ist ein System von dichten Rohrleitungen und Ventilen erforderlich, die über einen Kompressor mit einem Druck beaufschlagt werden. Aufgrund der Druckbeaufschlagung wird eine Abfolge von Handlungen vorgenommen, wobei hierfür die tatsächliche Anwesenheit eines Befestigungstellers und einer Schraube nicht ausschlaggebend ist.

Aus der DE-A-36 25 586 ist eine Setzvorrichtung bekannt, die dazu dient, für einen Befestigungsteller eine möglichst gute Position für eine Befestigung auf einer Dachoberfläche zu finden. Hierfür ist ein Sensor vorgesehen, der auf die Profilierung einer mit einem Wellblech belegten Dachoberfläche reagiert, um dann auf einem Wellenberg des Wellbleches einen Befestigungsteller mit einer Schraube befestigen zu können.

Es ist die Aufgabe der vorliegenden Erfindung, eine Setzvorrichtung zum Setzen von Halteeinrichtungen, vorzugsweise von plattenartigen Halteeinrichtungen, insbesondere von Befestigungstellern, zur Befestigung von Dachabdichtungsbahnen vorzuschlagen, die die Halteeinrichtungen besonders zuverlässig in die Setzposition befördert.

Diese Aufgabe wird durch eine Setzvorrichtung mit den im Patentanspruch 1 aufgeführten Merkmalen gelöst.

Zweckmäßige Ausführungsformen gehen aus den in den Unteransprüchen definierten Merkmalen hervor.

Die gemäß der Erfindung erzielbaren Vorteile beruhen auch darauf, daß die erfindungsgemäße Setzvorrichtung zumindest Teile ihrer Funktionen mittels mindestens eines Sensors in Verbindung mit einer Vorschubeinrichtung zuverlässig durchzuführen vermag, wobei die Setzvorrichtung elektronisch gesteuert ist.

Um die Halteeinrichtungen bzw. Befestigungsteller mittels einer Vorschubeinrichtung aus dem Speicher in bzw. über eine Setzposition zu befördern, sollten diese so ausgestaltet sein, daß nur ein Befestigungsteller in den Zuführkanal gelangen kann, wobei der Zuführkanal im wesentlichen horizontal bzw. linear verläuft. Dementsprechend weist der Zuführkanal im wesentlichen nur die Höhe eines Befestigungstellers auf. Die Vorschubeinrichtung, die in dem Zuführkanal angeordnet ist, schiebt den Befestigungsteller in bzw. über eine Setzposition, wobei ein Nachrücken eines weiteren Befestigungsteller vermieden wird, indem die Vorschubeinrichtung beispielsweise einen ebenen, die Höhe der Zuführstrecke im wesentlichen zumindest teilweise oder abschnittweise ausfüllenden Bereich aufweist, der das Nachrücken eines weiteren Befestigungstellers verhindert.

Auf diese Weise können die im Speicher befindlichen Befestigungsteller sicher vereinzelt werden und ohne Fehlfunktion in die vorbestimmte Setzposition gelangen.

Besonders vorteilhaft ist die Verwendung eines elektromagnetischen Motors, insbesondere eines Fünf-Phasen-Schrittmotors als Antrieb für die Vorschubeinrichtung. Hierdurch verringert sich der Platzbedarf für die gesamte Vorschubeinrichtung, und es ist möglich, die Setzposition des Befestigungsteller noch dichter an den Rand der erfindungsgemäßen Vorrichtung zu verlegen, so daß die Dachabdichtungsbahnen auch im Randbereich eines Daches in einer optimierten Position maschinell verlegt und gesetzt werden können.

Besonders vorteilhaft ist es, wenn der Vorschub über eine anordnung von entsprechenden Magneten geeregelt wird. Dabei fallen die Halteeinrichtung der Befestigungsteller in einen Schacht, indem sie über Magneten gehalten und durch Eigengewicht auseinandergezogen werden. Dadurch bedingt kann bei den Befestigungstellern auf sogenannte Stapelsicken verzichtet werden und es können die meisten Varianten der im Markt befindlichen metallischen Halteeinrichtgung verarbeitet werden. Der jeweils unten liegende Halteeinrichtung wird sodann über ein elektronisch gesteuertes Magnetrad bzw. magnetische Scheiben über eine Drehung von mindestens 90° nach vorne geschoben und dabei vorzugsweise gegen einen weiteren Magneten im Bereich der Verschraubungsstelle der Vorrichtung transportiert. Dabei werden die Befestigungsteller durch die magnetischen Kräfte der Magnet- bzw. Elektromagneteinrichtungen jeweils in der erforderlichen Schraub- bzw. Befestigungsposition gehalten.

Bei einer Ausführungsform mit magnetisch arbeitender Vorschubeinrichtung wird eine Halteeinrichtung durch einen mit Dauermagneten versehener Rollenmagnet aus dem Magazin für die Halteeinrichtung entnommen. Durch die Drehbewegung des Rollenmagneten wird eine Halteeinrichtung in die Position über einer Öffnung in der Bodenplatte transportiert, die gleichzeitig die Setzposition für die Halteinreichtung darstellt.Ein am Ende dieser Öffnung bzw. an dem forderen Ende der Halteeinrichtung angeordneter Ausricht-Magnet, bzw. Dauermagnet kann dafür sorgen, daß die Halteeinrichtung in ihrer Position vor der Öffnung, in der der Rollenmagnet nur noch auf den hinteren Abschnitt der Halteeinrichtung einen Zugriff hat, wenigstens im wesentlichen in der horizontalen Ausrichtung gehalten wird. Die Spitze der Halteeinrichtung kann dann vorteilhafterweise nicht frühzeitig auf die Dachoberfläche abkippen und verkanten. Außerdem wird für die Zuführung bzw. Durchführung der Befestigungseinrichtung durch die Halteeinrichtung regelmäßig eine definierte Ausrichtung der positionierten Halteeinrichtung vorgegeben. Die verschiedenen Funktionen können vom Benutzer gesteuert oder elektrisch bzw. elektronisch gesteuert, jedoch vorzugsweise über mindestens einen Sensor synchronisiert ausgelöst bzw. durchgeführt werden.

Um unterschiedlichen Typen von Halteeinrichtungen Rechnung tragen zu können, kann es notwendig sein, den Ausricht-Magnet und/oder den Rollenmagnet vorzugsweise von außerhalb der erfindungsgemäßen Vorrichtung einstellbar zu installieren. So ist gewährleistet, daß unterschiedliche Halteeinrichtungen verarbeitet werden können, wenn die Positionen des Ausricht-Magnetes und/oder des Rollenmagnetes auf unterschiedliche Größen von Halteinrichtungen eingestellt werden können.

Die Befestigungsteller werden über Befestigungseinrichtungen, insbesondere Schrauben, befestigt, die über einen Zuführkanal aus einem Speicher zuführbar sind. Bevorzugt ist dabei eine Ausführungsform, bei der die einzelnen Schrauben in einem Gurt aufgereiht sind. Bei dieser Ausführungsform kann der Gurt über eine Zuführstrecke vorgezogen werden, wodurch die sichere Versorgung mit Schrauben gewährleistet ist.

Vorteilhafterweise werden die Schrauben bzw. jeweils eine Schraube mittels einer Einrichtung aus dem Gurt entfernt, wobei diese Einrichtung beispielsweise ebenfalls aus einer Vorschubeinrichtung bestehen kann, die mittels eines Elektromagneten angetrieben wird. Über den Elektromagneten kann eine Achse vorgeschoben bzw. zurückgezogen werden, wobei eine jeweilige Schraube aus dem Gurt entfernt wird und einem vorteilhafterweise vertikalen Kanal zugeführt wird, der über der Setzposition der Befestigungsteller bzw. deren Durchführungsloch, mündet.

Zweckmäßigerweise wirkt die Schraubeinrichtung, beispielsweise ein elektrischer Schrauber aber auch eine einfache Bohrmaschine, die zum Schrauber umfunktioniert worden ist, ebenfalls über diesen im wesentlichen vertikalen Kanal auf die Befestigungseinrichtung bzw. Schraube ein, um die Schraube durch das Loch in dem Befestigungsteller und durch die Dachabdichtungsbahn bzw. Dachabdichtungsbahnen hindurch, mit der Dachoberfläche zu verbinden.

Um die erfindungsgemäße Vorrichtung flexibel verwendbar zu gestalten, sollten die Zuführung für die Schrauben, die Vorschubeinrichtung für die Schrauben und der elektrische Schrauber selbst so einstellbar sein, daß Schrauben mit unterschiedlicher Länge verarbeitet werden können. Hierfür muß insbesondere die Vorschubeinrichtung für die Schrauben, die die Schrauben aus dem Gurt entfernt, zum Ergreifen bzw. Herausschieben von Schrauben unterschiedlicher Länge geeignet sein, was z.B. durch die Anordnung einer entsprechenden Vielzahl von Greifern in unterschiedlicher Höhe gewährleistet sein kann. Auf diese Weise läßt sich jede beliebige Schraubenlänge, beispielsweise in einem Bereich von 40 bis 200 mm, vorzugsweise 60 bis 180 mm, sicher ergreifen und in den im wesentlichen vertikalen Kanal einführen.

Der Schrauber kann insofern einstellbar sein, als er in Abhängigkeit von der Schraubenlänge vorjustierbar ist, so daß er in vertikaler Richtung keinen größeren Leerlauf überbrücken muß, um auf den Schraubenkopf zu treffen, der vorzugsweise ein Sechskantschraubenkopf ist, so daß am Ende des Schraubers vorzugsweise eine Sechskantschraubennuß vorzusehen ist. Außerdem ist der Schrauber insofern einstellbar, als er mit einem Endschalter versehen ist, so daß gewährleistet ist, daß die Dreh- bzw. Schraubbewegung des Schraubers beendet wird, sobald die gesamte Schraubenlänge in der Dachabdichtungsbahn bzw. der Dachoberfläche versenkt ist. Eine Vorjustierung wird jedoch in der Regel nicht nötig sein, wenn, wie im folgenden ausgeführt ist, die Schrauben z.B. als Gurt in einer Führungsschiene frei hängend in den Wirkungsbereich des Schraubers gefördert werden oder allein durch eine Neigung der Schiene durch die Schwerkraft bzw. das Eigengewicht der Schrauben rutschen.

Um den Schrauber sicher abzustützen, sollte die Führung bzw. Abstützung des Schraubers mittels einer Doppelständerführung oder dergleichen versehen sein.

Um die Rückführung der Schraubereinrichtung in eine Ausgangsposition auszuführen oder zumindest zu unterstützen, sollte eine Federeinrichtung, vorzugsweise mindestens eine Gasdruckfeder, vorgesehen sein. Beim Eindrehen einer Schraube könnte diese Federeinrichtung gespannt werden, um die Rückführung des Schraubers anschließend zu bewerkstelligen oder zumindest zu unterstützen.

Um die erfindungsgemäße Setzvorrichtung in zweckmäßiger Weise leicht handhabbar auszuführen, sollte zumindest eine Transportrolle, vorzugsweise zwei über eine Achse verbundene Transportrollen, vorgesehen sein, so daß die Vorrichtung auf diesen bewegt werden kann bzw. um die entsprechende horizontale Achse schwenkbar ist. Außerdem ist für die bessere Handhabbarkeit ein Zweihandlenker so angeordnet, daß sich die erfindungsgemäße Vorrichtung leicht steuern läßt. Der Lenker ist in einer ergonomisch vorteilhaften Position angebracht und kann außerdem verstellbar sein, so daß unterschiedlich gewachsene Personen den Lenker auf eine für sie jeweils günstige Position einstellen können.

Besonders vorteilhaft ist es, wenn einzelne, mehrere oder sämtliche Setzfunktionen der erfindungsgemäßen Vorrichtung durch Sensoren, insbesondere Magnetendschalter, auslösbar sind. Auf diese Weise können die einzelnen Bewegungsabläufe über die Auslösung der verschiedenen Magnetschalter überwacht werden.

So kann z.B., sobald die Lenkstange heruntergedrückt wird, durch die Abwärtsbewegung ein Magnetendschalter betätigt werden, der den elektrischen Schrauber einschaltet. Ein bereits in Setzposition befindlicher Befestigungsteller wird befestigt, indem die ebenfalls bereits zugeführte Schraube im Boden versenkt wird. Die Drehbewegung, mit der die Schraube eingedreht wird, kann dabei über eine Antriebswelle vorgenommen werden, die die Drehbewegung von dem elektrischen Schrauber auf eine Innensechskantnuß überträgt. Ist die vorzugsweise voreingestellte Einschraubtiefe erreicht, so wird ein weiterer Magnetendschalter ausgelöst, der den elektrischen Schrauber ausschaltet. Die Rückbewegung des elektrischen Schraubers in eine Ausgangsposition wird anschließend durch die erwähnte, durch die zum Schrauben erforderliche Abwärtsbewegung vorgespannte Federeinrichtung unterstützt bzw. bewerkstelligt. Sobald der Schrauber seine vorbestimmte Ausgangsposition erreicht hat, wird ein dritter Sensor, vorzugsweise ein Magnetendschalter, betätigt, der die Vorschubeinrichtungen für die Befestigungsteller und die Schrauben in Gang setzt, um dafür zu sorgen, daß der nächste Setzvorgang eingeleitet werden kann.

Um die Aufmerksamkeit der Bedienungsperson zu schonen, kann die Funktion der erfindungsgemäßen Vorrichtung über eine elektronische Steuereinrichtung auslösbar sein. Um eine Neuprogrammierung dieser elektronischen Steuereinrichtung nach jedem Stromausfall zu vermeiden, sollte diese Steuereinrichtung vorteilhafterweise nichtflüchtige Speicherzellen aufweisen. Diese nichtflüchtigen Speicherzellen sollten zum Teil programmierbar sein und zum Teil wie EPROM's fest voreinstellbar sein. Dieses ist z.B. dann vorteilhaft, wenn einerseits in den EPROM's ein festes Programm für die Funktionssteuerung eingespeichert werden soll und zum anderen in die direkt programmierbaren, nichtflüchtigen Speicherzellen Daten, wie z.B. Schraubenlänge, Setzabstand u.dgl. mehr vor Ort löschbar, jedoch durch Stromausfall oder Netzstörungen nicht löschbar, gespeichert werden sollen.

Zwar wird die bevorzugte Ausführungsform der Vorrichtung nach der vorliegenden Erfindung mittels 200 Volt/50-60 Hz Wechselstrom angetrieben, was in der Regel über ein Verlängerungskabel durchgeführt werden wird, jedoch läßt sich die erfindungsgemäße Vorrichtung durch einen aufladbaren bzw. austauschbaren Energiespeicher, z.B. einen Akku, auch autark einsetzen.

Da viele Dachgrundflächen ein Profil aufweisen, welches im Querschnitt gesehen beispielsweise eine Wellenform oder eine geriffelte Form o.dgl. haben kann und die Schraube bevorzugt in einen maximal nach oben vorstehenden Bereich eingedreht werden soll, kann die erfindungsgemäße Vorrichtung einen Sensor aufweisen, der die optimale Setzposition für den Befestigungsteller und für das Eindrehen der Schraube ermittelt. Da die Dächer häufig aus Blech sind, empfiehlt sich hierfür insbesondere ein induktiver Sensor und insbesondere ein induktiver Näherungssensor, der auf die über eine elektrisches Feld in dem Blech des Daches verursachten Wirbelströme reagiert.

Eine vorteilhafte Setzposition ließe sich z.B. durch einen optischen oder akustischen Sensor an die Bedienungsperson bzw. eine Steuerelektronik übermitteln.

Die Vorschubeinrichtungen für die Halte- und Befestigungseinrichtungen bzw. die Befestigungsteller und die Schrauben weisen elektromagnetische Antriebseinheiten auf, da diese wenig Platz benötigen und weitaus robuster sind als Mechaniken mit vergleichbarer Funktion. Außerdem lassen sich derartige Vorschubeinrichtungen über die elektronische Steuerung vollautomatisch steuern, während Mechaniken meist durch die Bedienungsperson von Hand aktiviert werden müssen.

Um die Dachabdichtungsbahnen besonders gleichmäßig zu befestigen, sollte ein Sensor vorgesehen sein, der in Abhängigkeit von der mit der Vorrichtung zurückgelegten Strecke ein Signal abgibt, welches der Bedienungsperson bzw. der elektronischen Steuereinrichtung mitteilt, in welchem Abstand der nächste Befestigungsteller zu setzen ist. Das Signal kann dabei akustischer oder optischer Art sein, indem beispielsweise ein Piepston erklingt oder ein Signallämpchen aufleuchtet.

Zweckmäßigerweise ist der Signalgeber bzw. der Sensor mit einer der Transportrollen verbunden, auf denen die Vorrichtung gelagert ist, um von einer Setzposition zur nächsten Setzposition bewegt zu werden. Anhand der Umdrehungszahl und des Rollendurchmessers kann die zurückgelegte Strecke in bekannter Weise ermittelt werden.

Vorteilhafterweise läßt sich der Signalgeber auf verschiedene Setzabstände einstellen, wodurch gewährleistet ist, daß die Dachabdichtungsbahn einerseits gleichmäßig, aber auch an unterschiedliche Anforderungen angepaßt, befestigt werden kann. Diese unterschiedlichen Anforderungen können z.B. durch Dachrandpositionen, Schornsteine oder Dachaufbauten bedingt sein.

Um die Zuführung der Befestigungsteller in vorteilhafter Weise sicherzustellen, kann zwischen dem Speicher für die Befestigungteller und dem Zuführkanal für die Befestigungsteller eine Vereinzelungseinrichtung vorgesehen sein. Natürlich ist auch diese Vereinzelungseinrichtung besonders dann zu bevorzugen, wenn auch diese elektronisch gesteuert ist. Dabei kann die Steuerung durch die gleichen Sensoren in Verbindung mit der allgemeinen Steuerelektronik, aber auch durch zusätzliche Sensoren mit einer separaten Steuerelektronik ausgelöst werden.

Die Vereinzelungseinrichtung kann dabei eine Trenneinrichtung aufweisen, durch die die im Speicher befindlichen Halteeinrichtungen voneinander separierbar sind. Dabei sollte diese Trenneinrichtung in einer besonders bevorzugten Ausführungsform zwischen dem letzten und dem vorletzten Befestigungsteller eingreifen, um die über dem letzten Befestigungsteller im Speicher befindlichen Befestigungsteller von dem letzten Befestigungsteller abzuheben, der als nächstes in eine Setzposition befördert werden soll. Mit anderen Worten, die Trenneinrichtung, die mindestens einen Trennabschnitt aufweisen sollte, der beispielsweise zugespitzt ist, so daß er wie ein Keil zwischen die Befestigungsteller getrieben werden kann, greift zwischen dem als nächstes zuzuführenden Befestigungsteller und die noch im Speicher verbleibenden Befestigungsteller ein, um diese voneinander zu trennen.

Die Trenneinrichtung kann dabei in Richtung auf die Befestigungsteller beispielsweise durch eine Druckfeder vorbelastet sein.

Besondere Vorteile ergeben sich, wenn die Vereinzelungseinrichtung eine Vorschubeinrichtung aufweist, mit der ein vereinzelter Befestigungsteller aus seiner Position unterhalb des Speichers in eine Position auf bzw. über der Zuführstrecke gefördert werden kann. Diese Vorschubeinrichtung kann beispielsweise aus einem Schieber bestehen, der gleichzeitig den räumlich vorauseilenden Trennabschnitt der Trenneinrichtung auslösen kann, wodurch die Funktionen elektronisch gesteuert und synchronisiert besonders einfach realisierbar sind. Dabei kann die Vorschubeinrichtung sowohl über einen spearaten Antrieb als auch über einen bereits vorhandenen Antrieb bewegt werden.

Insofern die Befestigungsteller jedoch so ausgestaltet sind, daß sie sich ohne weiteres voneinander abschieben lassen, erübrigt sich die Verwendung der oben genannten Vereinzelungseinrichtung.

Weitere Vorteile ergeben sich im Zusammenhang mit der Zuführung der Schrauben. Die Schrauben, die auch in Form von Gurten zugeführt werden können, werden in eine Schiene eingelegt und können in dieser Schiene, die zumindest über Teile der Zuführtrecke für die Schrauben vorgesehen ist, auf einfache Weise in ihre Schraubposition und damit in ihre spätere Befestigungsposition gefördert werden. Dadurch, daß die Schrauben auch frei hängen können, kann der Transport der Schrauben auch ganz einfach durch das Eigengewicht der Schrauben durchgeführt werden, wobei die Schrauben durch die Schienen geführt in die gewünschte Position rutschen können. Natürlich kann die Bewegung der Schrauben auch mittels eines Schrittmotors oder einer sonstigen Antriebseinrichtung unterstützt werden.

Zusammenfassend sei darauf hingewiesen, daß die Vorteile der Setzvorrichtung nach der vorliegenden Erfindung insbesondere darin bestehen, daß durch die Anordnung von Sensoren und einer Steuerelektronik die exakte Synchronisation der wesentlichen Funktionen der erfindungsgemäßen Vorrichtung möglich ist, wodurch auf anfällige, komplizierte verkoppelte Mechaniken verzichtet werden kann, was insbesondere in Verbindung mit jeweiligen Vorschubeinrichtungen für die Befestigungselemente von Vorteil ist. Außerdem ergeben sich dadurch Vorteile, daß der Arbeitsabstand im Rand- und Eckbereich minimal ist. Durch die Doppelständerführung mit einem Gasdruckstoßdämpfer ist eine robuste Bauweise gewährleistet, so daß die Vorrichtung den zum Teil sehr rauhen Anforderungen auf einer Baustelle genügt. Sämtliche Funktionseinheiten sind über eine zentrale Stromversorgung gekoppelt. Der gesamte Setz- bzw. Schraubvorgang ist elektrisch und gegebenenfalls elektronisch gesteuert. Die erfindungsgemäße Vorrichtung läßt sich auf die Gestalt nahezu jeder realen Bedienungsperson ergonomisch einstellen. Der elektrische Schrauber läßt sich sowohl im automatischen als auch im teilautomatischen Einsatz von Mikroschaltern ein- und ausschalten. Durch die Auswahl der Transportrollen, insbesondere aus Polyamid, ist gewährleistet, daß die Transportrollen stabil, insbesondere säurefest, sind und in Verbindung mit der Lenkerform trotzdem gute Fahreigenschaften der erfindungsgemäßen Vorrichtung gesichert sind. Durch die Verwendung preisgünstiger und robuster Bauteile ist gewährleistet, daß die erfindungsgemäße Vorrichtung trotz ihrer vielfältigen Vorteile gegenüber dem Stand der Technik auch für den kleinen Handwerksbetrieb in Betracht kommt.

Es ist erkennbar, daß Kombinationen der Merkmale, die in den Unteransprüchen definiert sind, mit den erfindungsgemäßen Merkmalen der Lösung der der Erfindung zugrundeliegenden Aufgabe förderlich sind.

Der Zuführkanal für die Schrauben läßt sich ergänzend über eine Skala genau auf die Schraubenlänge einstellen und arretieren, wodurch ebenfalls die Kompatibilität der erfindungsgemäßen Vorrichtung in Bezug auf unterschiedlichste Schraubenlängen gefördert wird, wobei gleichzeitig der elektrische Schrauber auf die Schraubenlänge eingestellt wird, was jedoch meist nur bei absolut ungewöhnlichen Schraubenlängen erforderlich sein wird.

Durch die Verwendung einfachster Mechanik ist gewährleistet, daß die Funktionseinheiten der erfindungsgemäßen Vorrichtung einerseits robust, andererseits leicht zugänglich und reparaturfreundlich sind.

Die Abmessungen der erfindungsgemäßen elektronisch gesteuerten Setzvorrichtung erlauben es, diese ohne Montagearbeiten in voller Arbeitslänge zu verpacken und aus dieser Verpackung zu entnehmen, um sie auf einer Baustelle einzusetzen.

Nachfolgend wird die vorliegende Erfindung unter Bezugnahme auf die beiliegenden Figuren anhand einer besonders vorteilhaften Ausführungsform näher erörtert. Dabei werden weitere Vorteile und Merkmale gemäß der vorliegenden Erfindung offenbart. Es zeigen:
- Fig. 1: eine Seitenansicht einer Ausführungsform der erfindungsgemäßen Setzvorrichtung;
- Fig. 2: eine Frontalansicht der Ausführungsform gemäß Fig. 1;
- Fig. 3: eine Ansicht der Ausführungsform gemäß den Fig. 1 und 2 in einer Draufsicht;
- Fig. 4: eine mögliche Ausführungsform einer Bodenplatte für die Vorrichtung gemäß den Fig. 1 bis 3;
- Fig. 5: eine Vorschubeinrichtung aus verschiedenen Perspektiven;
- Fig. 6: eine Führung für die Vorschubeinrichtung gemäß Fig. 5;
- Fig. 7: eine Vereinzelungseinrichtung in einer schematischen Querschnittsdarstellung; und
- Fig. 8: eine Ausfführungsform gemäß der Erfindung mit magnetisch bzw. elektromagnetisch an den Befestigungstellern eingreifenden Einrichtungen in einer querschnittlichen Darstellung;
- Fig. 9: die Ausführungsform gemäß Fig. 8 im Längsschnitt;
- Fig. 10: eine Draufsicht auf einen ebenen Schnitt durch die Ausführungsform gemäß den Fig. 8 bzw. 9; und
- Fig. 11: eine schematische seitliche Schnittdarstellung einer anderen Ausführungsform mit Magneten bzw. Dauermagneten.

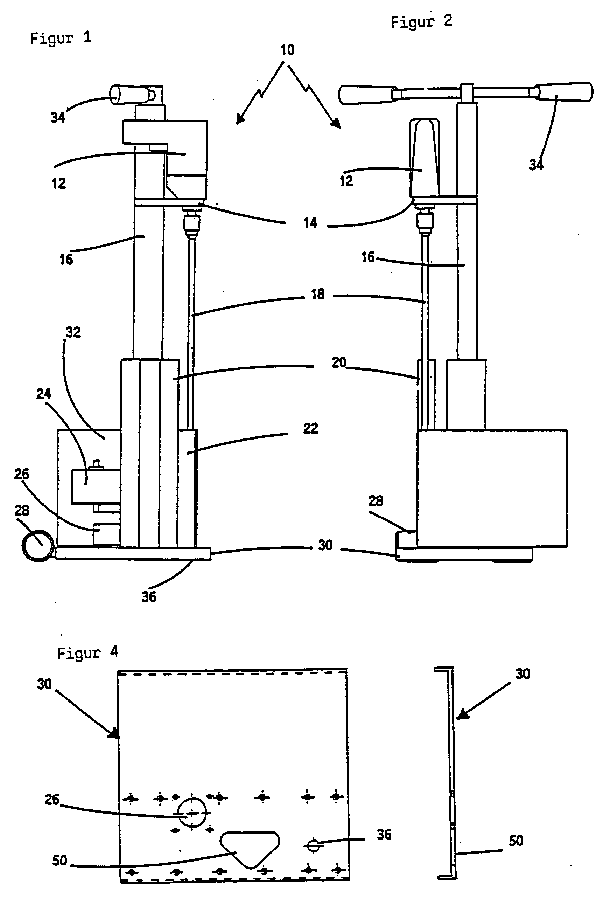

In Fig. 1 ist eine bevorzugte Ausführungsform der erfindungsgemäßen elektronisch gesteuerten Setzvorrichtung allgemein durch das Bezugszeichen 10 gekennzeichnet.

Die Vorrichtung 10 weist allgemein eine Stützkonstruktion 16 auf, an der ein elektrischer Schrauber über eine Halterung 14 befestigt ist. Die Halterung 14 kann in ihrer Höhe verstellbar ausgeführt sein. Am oberen Ende der Stützkonstruktion 16 ist ein Lenker 34, insbesondere ein Zweihandlenker, vorgesehen. Der Schrauber ist über eine Antriebswelle 18 mit einem Eingriffsprofil verbunden. Dieses Profil kann z.B. aus einem Schlitz- oder Kreuzschlitzschraubenzieherprofil, bevorzugt aber aus einer Innensechskantnuß bestehen.

Die Vorrichtung ist insgesamt auf einer Bodenplatte bzw. Grundplatte 30 montiert, die zumindest an ihrem einen Ende eine oder mehrere Transportrollen 28 aufweist. Auf dieser Bodenplatte 30 sind der Speicher 20 für die Befestigungsteller, der Speicher 32 für die Schrauben bzw. den Schraubengurt sowie elektromagnetische Antriebseinheiten 24, 26 angeordnet.

Die manuell, halbautomatisch oder vollautomatisch ausführbare Vorrichtung ist leicht handhabbar und läßt sich auf den vorzugsweise kugelgelagerten Transportrollen 28 in nahezu jede gewünschte Position auch nahe von Dachrändern, Dachaufbauten oder Schornsteinen oder dergleichen bewegen.

Aus Fig. 2 läßt sich insbesondere erkennen, daß die Schraubposition, in der ein zu setzender Befestigungsteller festzuschrauben ist, sehr dicht am Rand der erfindungsgemäßen Vorrichtung 10 liegt.

In Fig. 1 deutet das Bezugszeichen 36 die Lage eines Sensors an, mit dem das Profil des Daches, auf dem die Dachabdichtungsbahn befestigt werden soll, nachvollzogen werden kann, um so eine optimierte Lage für die Befestigung eines Befestigungsteller mittels einer Schraube zu bestimmen.

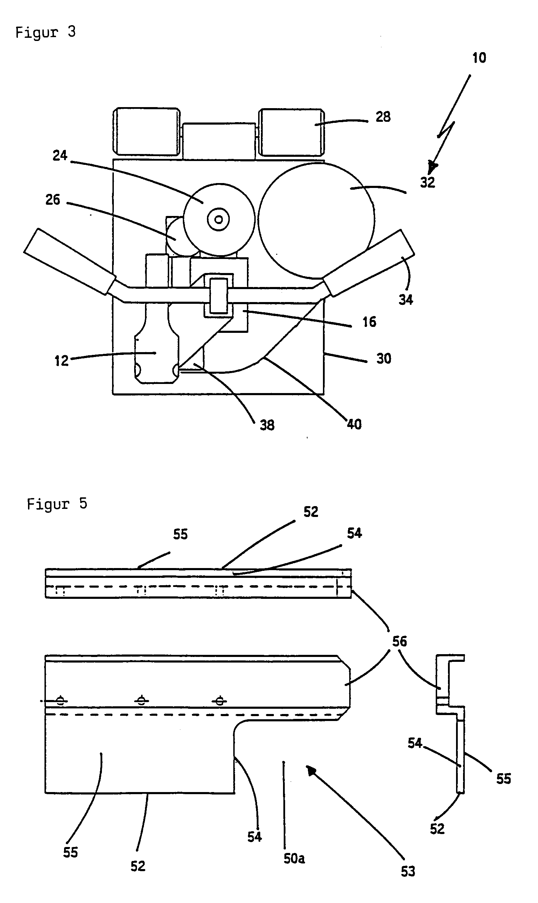

Anhand der Fig. 3 läßt sich die Funktion der Schraubenzuführung der erfindungsgemäßen Vorrichtung 10 besonders gut erkennen.

In dem Schraubenspeicher 32 ist ein Gurt mit Schrauben (nicht zu erkennen) eingelegt. Dieser Gurt wird über eine Schraubenführung 40 in den Wirkungsbereich einer Vorzugeinheit für die Schraubenvereinzelung und den Transport des Schraubengurtes geführt. Der Antrieb für die Schraubenvereinzelung und den Transport des Schraubengurtes ist in Form der Antriebseinheit 24 an der Stützkonstruktion bzw. dem Rahmen 16 vorgesehen. Als Antrieb arbeitet ein Elektrodrehmagnet 24 für die Vorzugeinheit. Dieser zieht den Gurt vor, um eine Schraube in eine Vereinzelungsposition in dem Einführbereich zu bringen, der in Verbindung mit der Antriebswelle 18 des Schraubers 12 steht. Sobald der Schraubengurt so weit vorgezogen ist, daß eine Schraube in dem besagten Einführbereich positioniert ist, wird über eine (nicht dargestellte) Verbindungsachse, Zahnstange o.dgl., die von dem Elektrodrehmagnet 24 für die Vorzugeinheit 38 in den vorderen Bereich für die Schraubenvereinzelung reicht, aus dem Schraubengurt vereinzelt und in einen in Fortsetzung der Antriebswelle 18 anschließenden Zuführkanal (nicht dargestellt) eingeführt. Für die Entspannungsbewegung des Elektrodrehmagneten 24 kann für die Vorzugmechanik für den Schraubengurt ein Freilauf vorgesehen sein, so daß sich für den Schraubengurt eine Transportbewegung ergibt. Die Antriebsstange für die Schraubenvereinzelung, die gleichfalls mit dem Bezugszeichen 38 bezeichnet ist, wird mit der Entspannungsbewegung des Elektrodrehmagneten 24 zusammen in eine Ausgangslage zurückbewegt.

Der Elektromotor 26, der vorzugsweise als ein Fünf-Phasen-Schrittmotor ausgestaltet ist, treibt die Vorschubeinrichtung für die Befestigungsteller an. Dabei wird jeweils ein Befestigungsteller aus dem Speicher bzw. Magazin 22 (siehe Fig. 1, 2) in vereinzelter Form entnommen und in eine Setzposition befördert.

Der Fünf-Phasen-Schrittmotor 26 empfiehlt sich insbesondere deshalb, weil er durch Umpolung in verschiedene Richtungen angetrieben werden kann, so daß sowohl ein Vorschub als auch eine Rückwärtsbewegung in eine Ausgangslage elektrisch gesteuert möglich ist.

Fig. 4 stellt eine Grund- bzw. Bodenplatte 30 dar, wie sie für eine Vorrichtung 10 nach den Fig. 1 bis 3 infrage kommt. Die Grundplatte weist verschiedene Montagebohrungen auf, auf denen die verschiedenen Funktionseinheiten der erfindungsgemäßen Vorrichtung 10 montiert sind. Außerdem ist die Lage des Fünf-Phasen-Schrittmotors 26 auf der Grund- bzw. Bodenplatte 30 erkennbar. Eine nahe des Randes der Bodenplatte 30 gebildete Öffnung 50 zeigt zum einen die Setzposition für die Befestigungsteller an und deutet zum anderen eine bevorzugte Form der Befestigungsteller an. Allerdings läßt sich der Bereich mit der Öffnung 50 austauschbar ausgestalten, so daß sich unterschiedliche Formen von Öffnungen und damit unterschiedliche Formen von Befestigungstellern verwenden bzw. verarbeiten lassen. Die Position 36 deutet einen Induktionssensor an, wie er bereits oben beschrieben worden ist. Außerdem läßt sich an der Bodenplatte 30 ein Berührungssensor anbringen, der der Bedienungsperson bzw. den Funktionseinheiten oder einer elektrischen Steuerung andeutet, zu welchem Zeitpunkt die Bodenplatte 30 auf dem Dach aufliegt, so daß in Abhängigkeit hiervon ein Befestigungsvorgang gesteuert werden könnte.

Der rechte Teil der Fig. 4 zeigt die Grund- bzw. Bodenplatte 30 im Querschnitt, wobei die Öffnung 50 angedeutet ist, durch die die Befestigungsteller in ihre endgültige Setzposition auf der Dachoberfläche befördert werden.

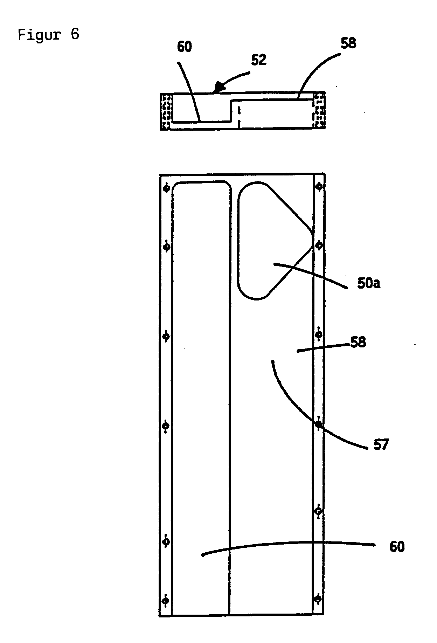

Aus den Fig. 5 und 6 geht eine mögliche Ausgestaltungsform der Mechanik der Zuführeinrichtung für die Befestigungsteller hervor. Der zentrale Teil in Fig. 5 zeigt den Schieber 52 der Vorschubeinheit. Der Schieber 52 weist eine Mitnahmefläche 54 auf, an die sich eine Ebene 55 anschließt, die während des Vorschubvorganges die Mündung des Speichers 20 für die Befestigungsteller verschließt, so daß ein Nachrücken von weiteren Befestigungstellern verhindert wird. Sobald ein Befestigungsteller in seine Setzposition befördert worden ist, wird der Schieber 52 wieder zurückbewegt, bis die Ausnehmung 53 des Schiebers 52 in den Bereich der Entnahmeöffnung des Speichers 22 gelangt. Die Ebene 55 weist eine Materialstärke auf, die im wesentlichen der Höhe eines Befestigungsteller entspricht. Auf diese Weise ist gewährleistet, daß lediglich Freiraum für das Nachrücken eines einzelnen Befestigungsteller vorhanden ist.

Mit dem Bezugszeichen 50a wird angedeutet, in welchem Bereich die Öffnung 50a der Schieberführung 58 (siehe Fig. 6) angeordnet ist, wenn der Schieber 52 in seiner vorderen, ausgefahrenen Position angelangt ist. Die obere Darstellung in Fig. 5 zeigt eine Seitenansicht des Schiebers 52, der in der zentralen Darstellung der Fig. 5 in einer Draufsicht abgebildet ist. In der oberen Darstellung ist die Fläche 54 erkennbar, mit der ein vereinzelter Befestigungsteller mitgenommen wird und in den Bereich 50a, nämlich der Setzposition, vorgeschoben wird.

Das Profil 56 läuft während des Vorschubs in der Führung 60 (siehe Fig. 6), wobei die Oberfläche der Ebene 55 die Mündungsöffnung des Speichers bzw. Magazins 22 (siehe Fig. 1, 2) verschließt. In der rechten Darstellung in Fig. 5 sind die einzelnen Abschnitt des Schiebers nochmals in einem Querschnitt dargestellt. Der Schieber 52 wird insgesamt über den Fünf-Phasen-Schrittmotor 26 in seine vorgeschobene Lage, in der er einen vereinzelten Befestigungsteller in seine Setzposition fördert und in seine Ausgangslage bewegt.

Aus Fig. 6 ist die Führung für den Schieber 52 bzw. die Auflageführung 58 und Positionsöffnung 50a für den Befestigungsteller ersichtlich. Das Profil 56 des Schiebers 52 gleitet in der Führung 60, was insbesondere aus der oberen Darstellung der Fig. 6 hervorgeht. Ist der Schieber 52 in seiner Ausgangslage, so fällt ein Befestigungsteller im Bereich 57 auf die Führungsfläche 58 des Teils gemäß Fig. 6. Bewegt sich der Schieber 52 nun in seine vorgeschobene Position, so nimmt er den Befestigungsteller mit dem Mitnahmeabschnitt 54 mit und befördert ihn in eine Position unmittelbar über der Öffnung 50a, durch die der Befestigungsteller dann in seine endgültige Setzposition auf der Dachoberfläche hindurchfällt.

Fährt eine Bedienungsperson die erfindungsgemäße Vorrichtung in eine Setzposition, so hat der Schieber 52 für die Befestigungsteller hinreichend Zeit, in seine Ausgangslage zurückzukehren, nachdem ein Setzvorgang beendet worden ist. Entsprechendes gilt für die Vorzugeinrichtung für den Schraubengurt 24, 38 sowie die Schraubenvereinzelung. Sobald die Bedienungsperson die Vorrichtung 10 in eine neuerliche Setzposition transportiert hat, was beispielsweise durch einen Signalgeber angezeigt werden kann, der in Abhängigkeit von einer mit der Vorrichtung zurückgelegten Strecke ein Signal abgibt, setzt die Bedienungsperson die Vorrichtung 10 mit der Grundfläche der Bodenplatte 30 auf die Dachoberfläche auf. Bereits dieses kann durch einen Magnetendschalter registriert werden. Es ist jedoch auch möglich, einen entsprechenden Magnetendschalter über den Lenker 34 ansprechen zu lassen.

Sobald dieser erste Magnetschalter angesprochen hat, befördern die Vorschubeinrichtungen 26, 52 einen Befestigungsteller in seine Setzposition, während gleichzeitig eine Schraube in dem (nicht dargestellten) Zuführkanal unterhalb der Antriebswelle 18 des Schraubers 12 eingeführt wird. Sobald diese Funktionen abgelaufen sind, wird, ebenfalls aktiviert durch den ersten Magnetschalter, der Schrauber 12 eingeschaltet. Über die Antriebswelle 18 und eine Innensechskantnuß tritt der Schrauber in Kontakt mit einer positionierten Schraube und versenkt die Schraube durch das Schraubloch in den Befestigungsteller hindurch die Schraube in dem Dach, wobei die Dachabdichtungsbahn befestigt wird.

Sobald die voreingestellte Einschraubtiefe erreicht ist, so daß der Schraubenkopf, gegebenenfalls unter einer gewissen Pressung der Dachabdichtungsbahn, im Boden versenkt, wird ein zweiter Magnetendschalter ausgelöst, der den elektrischen Schrauber 12 abschaltet.

Die Aufwärtsbewegung des Schraubers 12 wird durch eine während des Schraubvorganges vorgespannte Gasfeder (nicht dargestellt) bewerkstelligt. Dabei wird nicht notwendigerweise der Schrauber selbst bewegt, sondern es ist auch möglich, nur die über eine Kupplung vorwärts bewegte Nuß vor und zurück zu bewegen.

Sobald der Schrauber bzw. die Nuß ihre voreingestellte Ausgangslage erreicht haben, wird ein dritter Magnetendschalter betätigt, der zum einen die Bedienungsperson über ein Anzeigesignal informiert, daß der Setzvorgang beendet ist und zum anderen den nächsten Setzvorgang einleitet.

Die Bedienungsperson kann nun zum nächsten Setzbereich fahren, um einen weiteren Setzvorgang durchzuführen.

Gegebenenfalls kann die Positionierung der Befestigungsteller auf dem Dach noch durch Federbleche unterstützt werden.

Der Schraubenspeicher kann mit einem Klemmhebel ausgestattet sein, wobei durch eine Skala die jeweilige Schraubenlänge, die verarbeitet werden soll, eingestellt werden kann. Die Einführung von Schrauben in den Schraubenzuführkanal kann durch eine Trichterführung unterstützt werden. Die Vereinzelungsvorrichtung 24, 38 kann eine vereinzelte Schraube dabei, falls gewünscht, auch zentrieren und gleichzeitig festhalten, bis der Schraubvorgang eingeleitet worden ist.

Die erfindungsgemäße Setzvorrichtung 10 kann sowohl halbautomatisch als auch vollautomatisch ausgeführt sein, wobei die mittels mindestens eines Sensors und der Steuerelektronik vorgenommene Funktionssteuerung und Synchronisation erhalten bleiben.

In Kombination sind die ausgestaltenden Merkmale der Problemlösung ersichtlich förderlich.

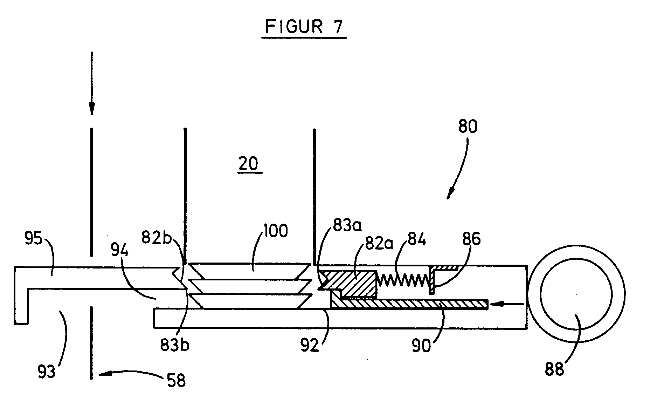

Eine in Fig. 7 dargestellte Vereinzelungseinrichtung ist allgemein durch das Bezugszeichen 80 gekennzeichnet. Diese Vereinzelungseinrichtung 80 ist im Anschluß an den Speicher 20 für die Befestigungsteller 100 angeordnet. Gegenüber der Mündung des Speichers 20 ist eine Führungsebene 92 vorgesehen, auf die ein für den nächsten Befestigungsvorgang vorgesehener Befestigungsteller vor und während der Vereinzelung zu liegen kommt. Die Führungsebene 92 bildet zusammen mit der Abdeckung 95 einen Führungsgang 94, der einen Öffnungsbereich 93 aufweist, der über der Auflageführung 58 für die vereinzelten Befestigungsteller 100 liegt. Die ungefähre Position der Auflageführung 58 ist durch ein entsprechendes Bezugszeichen angedeutet.

Der Vereinzelungsvorgang selbst wird durch eine Trennvorrichtung 82a durchgeführt. Die Trennvorrichtung 82a weist zumindest einen Trennabschnitt 83a auf, der so ausgebildet ist, daß er wie ein Keil oder dergleichen zwischen die einzelnen Befestigungsteller 100 greifen und diese voneinander separieren kann. Dabei sollte die Trennfläche 83a vorzugsweise so ausgebildet sein, daß sie die über dem weiterzuverarbeitenden Befestigungsteller 100 noch im Bereich des Speichers 20 befindlichen Befestigungsteller durch eine zum Trennabschnitt 83a gehörige Führungsfläche nach oben hin, zumindest über eine geringe Strecke, in den Speicher 20 hinein anheben kann. Um die Trennvorrichtung 82a nicht zu weit vorschnellen zu lassen, sollte am Ende des Trennabschnitts 83a ein Halteabschnitt vorgesehen sein, durch den die Bewegung der Trenneinrichtung 82a zwischen die Befestigungsteller 100 begrenzt wird, indem dieser Halteabschnitt beispielsweise das zum Speicher 20 nach oben gerichtete Ende des über dem zu vereinzelnden Befestigungsteller 100 liegenden Befestigungstellers umgreift. Die Trennvorrichtung 82a selbst kann durch eine Antriebs-oder Vorspanneinrichtung, wie z.B. eine Druckfeder 84, so vorgespannt sein, daß die Trenneinrichtung 82a zwischen die Befestigungsteller 100 eingreifen kann.

Gegenüber der Trennvorichtung 82a kann eine weitere Trennvorrichtung 82a angeordnet sein. Jedoch reicht es aus, wenn lediglich eine fix und unbeweglich vorgesehene Trenneinrichtung 82b mit einem Trennabschnitt 83b vorgesehen ist, die für den über dem zu separierenden Befestigungsteller angeordneten vorletzten Befestigungsteller ein Widerlager gegenüber dem Zugriff der Trennvorrichtung 82a bildet.

Um den vereinzelten Befestigungsteller von der Position unter dem Speicher 20 in den Öffnungsbereich 93 zu befördern, ist eine Fördereinrichtung, insbesondere ein Schieber 90 vorgesehen, der über einen separaten Schrittmotor 88, bzw. einen Vorschubmagneten oder dergleichen angetrieben sein kann. Vorteilhafterweise weist die Vorschubeinrichtung 90 an ihrer dem vereinzelten Befestigungsteller zugewandten Seite einen hakenartigen Vorsprung auf, der mit der Trenneinrichtung 82a im Eingriff befindlich sein kann, wobei die Spitze des Trennabschnitts 83a gegenüber dem äußersten, den Befestigungstellern zugewandten Ende hinaus in Richtung auf die Befestigungsteller erstreckt ist. Durch diese Ausführungsform kann die Trenneinrichtung 82a, die durch die Druckfeder 84 vorgespannt ist, dem Schieber 90 vorauseilend, zusammen mit diesem ausgelöst werden. Sobald der Schieber 90 den vereinzelten Befestigungsteller durch den Öffnungsbereich 93 auf die Auflageführung 58 überführt hat, gelangt der vereinzelte Befestigungsteller in den Wirkungsbereich des Schiebers 52 (siehe Fig. 5) und kann von diesem übernommen und weiter zu der Setzposition befördert werden. Sobald der Vereinzelungsschieber 90 die oben aufgezeigte Tätigkeit beendet hat, wird er durch den Schrittmotor 88 wieder in seine Ausgangslage zurückgezogen, wobei er mit dem besagten hakenartigen Vorsprung wiederum in Eingriff mit der Trenneinrichtung 82a gelangt und diese in eine vorgespannte Ausgangslage mitnimmt, wodurch der im Speicher 20 befindliche Stapel von Befestigungstellern freigebgeben wird und nach unten durchfällt, wodurch ein weiterer, zu vereinzelnder Befestigungsteller wieder auf der Führungsebene 92 zu liegen kommt.

Der gesamte Funktionsablauf der Vereinzelungseinrichtung 80 wird dabei wiederum über Sensoren in Verbindung mit der Steuerelektronik mit dem Funktionsablauf der übrigen Funktionseinheiten der erfindungsgemäßen Vorrichtung synchronisiert. So wird, sobald ein Setzvorgang beendet ist, und ein Meßsensor dieses angezeigt hat, z.B. dadurch, daß die Schraubereinrichtung in ihre Ausgangslage zurückgekehrt ist, die Schiebereinrichtung 90 ausgelöst, um die Trennvorrichtung 82a vorauseilen zu lassen, einen Befestigungsteller zu vereinzeln und diesen mitzunehmen, um ihn in den Bereich des Schiebers 52 gelangen zu lassen.

Am Ende der Förderstrecke kann beispielsweise ein Magnetendschalter angeordnet sein, der der Steuerelektronik anzeigt, daß die Schiebereinrichtung 90 eine Endstellung erreicht hat und nunmehr in die Ausgangslage zurückgezogen werden kann. Durch diesen Magnetendschalter (nicht dargestellt) könnte dann auch der Schieber 52 aktiviert werden.

Bei dieser Ausgestaltung können die übrigen Funktionseinheiten der erfindungsgemäßen Setzvorrichtung unverändert bestehen bleiben.

Jedoch kann die Schraubenzuführung, die entlang der Führungskurve 40 (siehe Fig. 3) abläuft, vorzugsweise auch so ausgeführt sein, daß eine Schienenführung angeordnet ist, in der die Schrauben beispielsweise allein durch ihr Eigengewicht, d.h. durch die Schwerkraft, in eine Position im Wirkungsbereich der Schraubereinrichtung 12 gefördert werden. Der Vorschub der Schrauben kann jedoch zusätzlich durch eine Antriebseinrichtung unterstützt werden.

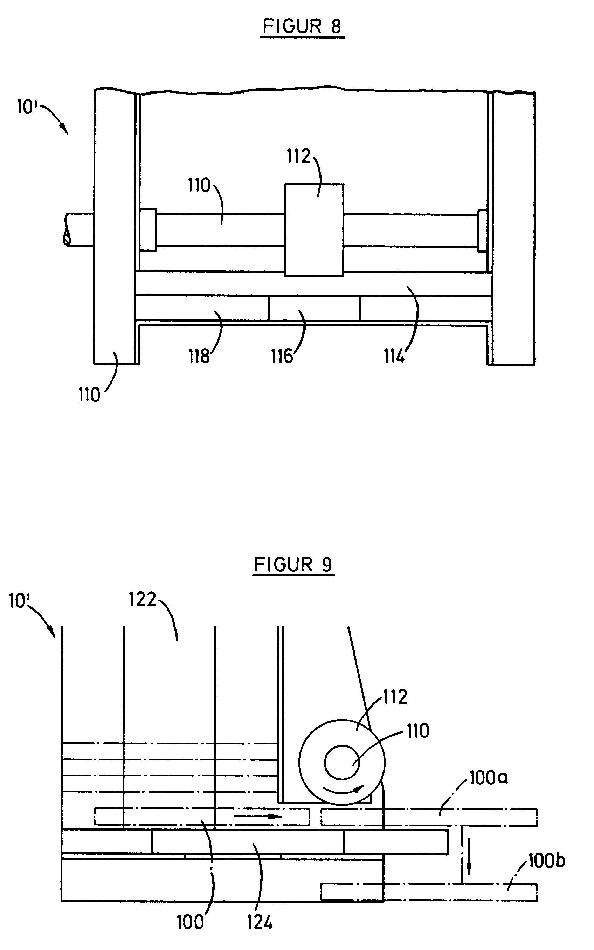

Die Fig. 8, 9 und 10 betreffen eine weitere äußerst vorteilhafte Ausführungsform gemäß der vorliegenden Erfindung. Während auch hier die Sensorik und Steuerung entsprechend der vorstehend erläuterten Ausführungsform bzw. Ausführungsformen ausgebildet sein kann, sind die Vorschubeinrichtungen mit magnetischen bzw. elektromagnetischen Hilfsmitteln 112, 124, 130 realisiert worden.

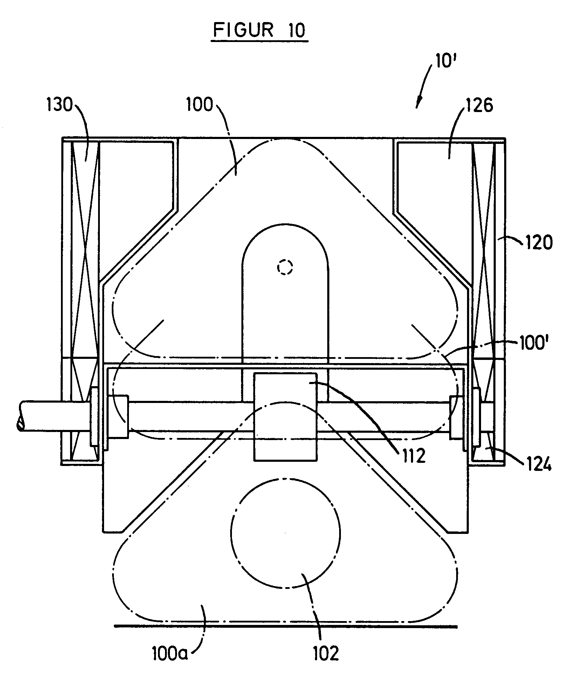

In Fig. 8 ist eine Magnetrolle 112 an einer Welle 110 gehalten, die beispielsweise über einen Schrittmotor bzw. einen 5-Phasen-Schrittmotor angetrieben werden kann. Die Welle ist innerhalb eines Rahmens 120 gehalten, der aus dickeren Blechen mit oder ohne Rahmenkonstruktion bestehen kann. Eine untere Führungsplatte 118 ist gegenüber der Welle 110 bzw. dem Rollenmagneten 112 angeordnet, und zwar derart, daß dazwischen ein gleichmäßiger Abstand 114 eingehalten wird, durch den mittels der Rotation des Rollenmagneten 112 ein Befestigungsteller 100 (siehe Fig. 9) bewegt werden kann. Die Führungsplatte 118 kann im wesentlichen gemäß Fig. 4 ausgebildet sein und die Öffnung 50 aufweisen. In der Platte 118 ist eine Ausnehmung 116 vorgesehen, durch die eine Schraube über eine Öffnung 102 durch den Befestigungsteller 100 bzw. 100a (siehe Fig. 10) hindurchgeführt werden kann, um den Befestigungsteller 100 bzw. 100a an einer Dachoberfläche zu befestigen.

In Fig. 9 ist erkennbar, wie bei der Ausführungsform 10' gemäß der Figur 8 aus einem Speicher 122 für Befestigungsteller 100 ein Befestigungsteller 100 herausgeführt wird. Dabei wird der Befestigungsteller 100 mittels eines Magneten 124 bzw. eines Hilfsmagneten in den Aktionsbereich der Magnetrolle 112 befördert, so daß die Magnetrolle 112 den Befestigungsteller 100 in die Position 100A bewegen kann, von wo aus der Befestigungsteller in eine Position 100B auf einer Dachoberfläche fällt bzw. geführt wird, so daß anschließend über einen Schrauber 12, 18 (siehe Fig. 1, 2) eine Schraube oder dergleichen durch die Öffnung 102 in dem Befestigungsteller 100 hindurchgeführt und damit der Befestigungsteller an der Dachoberfläche befestigt werden kann.

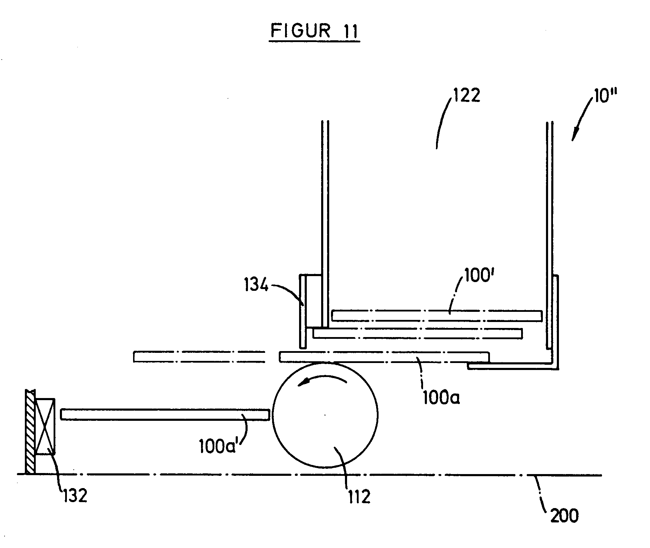

Da der Befestigungsteller 100a verkippen kann, kann von der Spitze des Befestigungstellers 100a ein Dauermagnet (siehe Fig. 11) vorgesehen sein, der den Befestigungsteller im wesentlichen horizontal halten kann.

Um keine Störungen der magnetischen Kräfte der einzelnen Fördereinrichtungen der Ausführungsform 10' zu veranlassen, sollten möglichst viele, vorzugsweise sämtliche Teile im Bereich der magnetischen bzw. elektromagnetischen Fördereinrichtungen 112, 124, 130 aus einem dimagnetischen Material hergestellt sein.

In Fig. 10 bezeichnet der mit dem Bezugszeichen 100 dargestellte Befestigungsteller die Position eines Befestigungstellers innerhalb des Speichers 122 (siehe Fig. 9). Die Magnete 130 bzw. die Hilfsmagnete 124 können bei der Vereinzelung und der Beförderung eines vereinzelten Befestigungstellers 100' bzw. 100a im Wirkungsbereich der Magnetrolle 112 behilflich sein. Diese Magnete 124, 130 sind jedoch nicht zwangsläufig erforderlich. Ausrichthilfen 126 können dabei behilflich sein, die Befestigungsteller 100 verkippungsfrei vor bzw. in der Position vor der Öffnung 50 (Fig. 4) zu halten, wobei hier auch ein Ausricht-Magnet 132 (Fig. 11) eine wesentliche Rolle spielen kann.

Der ein magnetisches Material aufweisende Befestigungsteller 100a bezeichnet die Position, in der der Befestigungsteller für die Fixierung in seiner Endlage auf der Dachoberfläche vorbereitet ist, so daß über eine Schraubvorrichtung bzw. eine Zuführvorrichtung für Schrauben oder dergleichen eine Schraube zugeführt werden kann, um diese durch die Öffnung 102 hindurchzuführen, um den Befestigungsteller 100a an der Dachoberfläche festzulegen, wobei gleichzeitig auf der Dachoberfläche ausgelegte Dachabdichtungsbahnen befestigt werden.

Wie bereits angedeutet, ist die Elektronik, Sensorik und dergleichen entsprechend den zuvor erörterten Ausführungsformen ausbildbar.

In Fig. 11 ist eine Ausführungsform 10'' ersichtlich, bei der lediglich eine Magnetrolle 112 mit einem Ausricht-Magnet 132 zusammenwirkt. Dabei wird aus dem Speicher 122 für Befestigungsteller 100' bzw Halteeinrichtungen 100' mittels einer Drehbewegung des Drehmagneten 112 (über die Welle 110) ein Befestigungsteller 100a herausgezogen und in eine Position 100a' befördert, in der der Befestigungsteller 100a' über den Ausricht-Magneten 132 im wesentlichen in der horizontalen gehalten wird. In dem der Drehmagnet 112 weiter gedreht wird, kann der Befestigungsteller 100a' bzw die Halteeinrichtung 100a' in einer definierten Position auf der Dachoberfläche 200 abgesetzt werden. Bereits während des Absetzvorgangs oder danach kann eine Schraube durch eine in dem Befestigungsteller 100a' vorhandene Öffung 102 (siehe Fig. 10) hindurch geführt werden, um den Befestigungsteller 100a' an der Dachoberfläche 200 zu fixieren. Um die Befestigungsteller 100a' in einer definierten Weise einzeln aus dem Speicher 122 über den Drehmagneten 112 entnehmen zu können, ist ein Gegenhalter 134 vorgesehen, der zwischen dem Drehmagneten 112 und dem Gegenhalter 134 lediglich einen Abstand frei läßt, der die Entnahme eines Befestigungstellers 100' zuläßt. In dem ein nachfolgender, ebenfalls von dem magnetischen Feld des Drehmagneten 112 angezogener Befestigungsteller 100' gegen den hervorstehenden Abschnitt des Gegenhalters 134 gegen läuft und zurückgehalten wird, wird der Befestigungsteller 100a weiter befördert und gelangt in die erwünschte Position oberhalb der Setzöffnung (Öffnung 50, Fig. 4), um dort in der Waagerechten Lage zwischen dem Drehmagneten 112 und dem Ausricht-Magneten 132 gehalten zu werden.

Vorteilhafterweise sind sowohl der Ausricht-Magnet 132 als auch der Drehmagnet 112 sowie der Gegenhalter 134 verstellbar, um die erfindungsgemäße Vorrichtung insbesondere auf unterschiedlichste, ferromagnetische Materialien oder zumindest stark paramagnetische Materalien enthaltende Befestigungsteller 100' einstellbar zu machen. Gegebenenfalls reicht es auch aus, entweder den Ausricht-Magneten 132 verstellbar zu installieren. Alternativ können auch die Magnetrolle 112 bzw. der Gegenhalter 134 in ihrer Posistion verstellbar installiert sein.

Die für die Erfassung der Transportbewegung der Befestigungsteller bzw. Halteeinrichtungen 100', 100a, 100a' vorgesehenen Sensoren können beispielsweise auf das Feld des Rollenmagneten 112 reagieren. Da es jedoch zu gelegentlichen Störungen kommen kann, so daß ein Befestigungsteller nicht zwangsläufig synchron zu dem Magnetfeld des Rollenmagneten 112 transportiert wird, kann es vorteilhaft sein, einen Sensor vorzusehen, der den Funktionsablauf unmittelbar anhand der Bewegung bzw. der Position des Befestigungsteller bzw. der Halteeinrichtung 100' 100a, 100a' synchronisieren kann.

## Patentansprüche

1. Setzvorrichtung zum Setzen von Halteeinrichtungen, vorzugsweise von plattenartigen Halteeinrichtungen, insbesondere von Befestigungstellern zur Befestigung von Dachabdichtungsbahnen auf einer Dachoberfläche,
a) mit mindestens einem Speicher (22, 32) für die Halteeinrichtungen und für schraubenartige Befestigungseinrichtungen,
b) mit mindestens einer Zuführeinrichtung (38; 52, 54) für die Halte- und die Befestigungseinrichtungen,
c) mit Zuführstrecken (40, 58) für die Befestigungs- und Halteeinrichtungen, und
d) mit einer Einsetzeinrichtung, insbesondere einer Schraubereinrichtung, zum Befestigen der Halteeinrichtungen mittels der Befestigungseinrichtungen,
**gekennzeichnet** durch die folgenden Merkmale:
e) mindestens einem elektrischen bzw. magnetischen Sensor, bevorzugt Magnetschalter, der zur zeitlich synchronisierten Steuerung der Zuführeinrichtung (52, 54) für die Halteeinrichtung relativ zu der Zuführeinrichtung (38) für die schraubenartigen Befestigungseinrichtungen ausgebildet ist,
f) mindestens einer Vorschubeinrichtung (52; 112, 124), um Halteeinrichtungen aus dem Speicher (20) über die Zuführstrecke (58) in bzw. über eine Setzposition (50, 50a) zu bewegen, wobei
g) die Zuführstrecke ist als Zuführkanal (58) für die Halteeinrichtungen bzw. Befestigungsteller ausgebildet und verläuft im wesentlichen linear bzw. horizontal,
h) die Setzvorrichtung ist elektronisch gesteuert.

2. Setzvorrichtung nach Anspruch 1, dadurch **gekennzeichnet**, daß die Vorschubeinrichtung bzw. -en (26, 52, 58) über einen elektromagnetischen Motor, insbesondere einen Fünf-Phasen-Schrittmotor (26), bewegbar ist.

3. Setzvorrichtung nach einem der Ansprüche 1 oder 2, dadurch **gekennzeichnet**, daß die Vorschubeinrichtung bzw. -en (26, 52, 58) Magnet- bzw. Elektromagneteinrichtungen aufweisen, mit denen die Halteeinrichtungen reversibel fixierbar sind bzw. in eine Setzposition transportierbar sind.

4. Setzvorrichtung nach einem der Ansprüche 1 bis 3, dadurch **gekennzeichnet**, daß die Setzposition (50, 50a) nahe des Randes einer Bodenplatte (30) der Vorrichtung (10) angeordnet ist.

5. Setzvorrichtung nach einem der Ansprüche 1 bis 4, dadurch **gekennzeichnet**, daß die Befestigungseinrichtungen, insbesondere Schrauben, vorzugsweise über einen Gurt aus dem Speicher (32) entlang des Zuführkanals zuführbar sind, bevorzugt indem der Gurt vorgezogen wird.

6. Setzvorrichtung nach Anspruch 5, dadurch **gekennzeichnet**, daß die Schrauben bzw. jeweils eine Schraube mittels Vorschubeinrichtungen, insbesondere Vereinzelungseinrichtungen (38) aus dem Gurt entfernbar sind und in einen im wesentlichen vertikalen Kanal, der über der Setzposition (50, 50a) mündet, einführbar sind bzw. ist, wobei die Einrichtung zum Befestigen insbesondere ein elektrischer Schrauber, vorzugsweise über den vertikalen Kanal auf die Befestigungseinrichtung bzw. Schrauber einwirkt.

7. Setzvorrichtung nach einem der Ansprüche 1 bis 6, dadurch **gekennzeichnet**, daß die Vorrichtung (10) auf unterschiedliche Längen der Befestigungseinrichtungen bzw. Schrauben einstellbar ist, wobei insbesondere die Einschraubtiefe einstellbar ist.

8. Setzvorrichtung nach einem der Ansprüche 1 bis 7, dadurch **gekennzeichnet**, daß eine elektronische Steuerung zum Auslösen der Zuführeinrichtung bzw. -en (38;52,54) vorgesehen ist und gegebenenfalls Funktionen der Vorrichtung (10) über eine elektronische Steuereinrichtung auslösbar sind.

9. Setzvorrichtung nach einem der Ansprüche 1 bis 8, dadurch **gekennzeichnet**, daß einzelne, mehrere oder sämtliche Setzfunktionen der Vorrichtung (10) durch Sensoren auslösbar sind.

10. Setzvorrichtung nach einem der Ansprüche 1 bis 9, dadurch **gekennzeichnet**, daß die Vorrichtung (10) einen vorzugsweise induktiven Sensor (36) aufweist, um eine vorteilhafte Setzposition auf einem Dach zu ermitteln.

11. Setzvorrichtung nach einem der Ansprüche 1 bis 10, dadurch **gekennzeichnet**, daß ein vorzugsweise akustischer oder optischer Signalgeber angeordnet ist, der in Abhängigkeit von einer mit der Vorrichtung (10) zurückgelegten Strecke ein Signal abgibt und der Signalgeber bevorzugt mit einer Transportrolle (28) der Vorrichtung (10) verbunden ist, um über die Umdrehungszahl der Transportrolle (28) die zurückgelegte Strecke zu ermitteln.

12. Setzvorrichtung nach einem der Ansprüche 1 bis 11, dadurch **gekennzeichnet**, daß zwischen dem Speicher (20) für die Halteeinrichtungen und der Zuführkanal (58) eine Vereinzelungseinrichtung (80) vorgesehen ist, die vorzugsweise elektronisch gesteuert ist und gegebenenfalls eine vorzugsweise in Richtung auf die Halteeinrichtung (100) vorgespannte (84) Trenneinrichtung (82a 82b) aufweist, durch die die im Speicher (20) befindliche Halteeinrichtungen (100) voneinander separierbar sind, wobei die Trenneinrichtung (82a, 82b) bevorzugt mindestens einen Trennabschnitt (83a, 83b) aufweist, der zwischen die Halteeinrichtugen (100) bzw. Befestigungsteller eingreift, um diese voneinander abzuheben.

13. Setzvorrichtung nach Anspruch 12, dadurch **gekennzeichnet**, daß die Vereinzelungseinrichtung (80) eine Vorschubeinrichtung (90) aufweist, um eine vereinzelte Halteeinrichtung (100) aus einer Position unterhalb des Speichers (20) in eine Position auf bzw. über den Zuführkanal (58) zu fördern.

## Claims

1. A setting device for placing retention elements, preferably plate-like retention elements, more particularly fastener plates for fastening weatherseals to a roof surface, comprising
a) at least one storage (22, 32) for said retention elements and for screw-type fastener elements,
b) at least one supply means (38; 52, 54) for said retention elements and fastener elements,
c) supply routes (40, 58) for said fastener elements and retention elements, and
d) insertion means, more particularly a wrench means, for securing said retention elements by means of said fastener elements
characterized by the following features:
e) at least one electric or magnetic sensor, preferably a solenoid switch configured for time synchronized control of said supply means (52, 54) for said retention element relative to said supply means (38) for said screw-type fastener elements,
f) at least one feeder means (52; 112, 124) for moving said retention elements from said storage (20) via said supply route (58) to/in a placing position (50, 50a),
g) said supply route being configured as a supply duct (58) for said retention elements or said fastener plates and oriented substantially linearly or horizontally,
h) said setting device being electronically controlled.

2. The setting device as set forth in claim 1, characterized in that said said feeder means (26, 52, 58) is movable via an electromagnetic motor, more particularly a five-phase stepper motor.

3. The setting device as set forth in claim 1 or 2, characterized in that said feeder means (26, 52, 58) comprises magnetic or solenoid means with which said retention elements are reversibly fixable or transportable into a setting position.

4. The setting device as set forth in any of the claims 1 to 3, characterized in that said placing position (50, 50a) is arranged in the vicinity of the edge of a bottom plate (30) of said device (10).

5. The setting device as set forth in claim 1 to 4, characterized in that said fastener elements, more particularly screws. are suppliable preferably via a belt from said storage (32) along said supply duct, preferably by said belt being advanced.

6. The setting device as set forth in claim 5, characterized in that said screws or one screw in each case is/are removable by means of feeder means, more particularly by singling means (38) from said belt and are/is introducable into a substantially vertical duct porting above said setting position (50, 50a), said fastening means, more particularly a power wrench, acting preferably via said vertical duct on said fastener element or screw.

7. The setting device as set forth in any of the claims 1 to 6, characterized in that said device (10) is adjustable to differing lengths of said fastener elements or screws, more particularly it being adjustable to the screw-in depth.

8. The setting device as set forth in any of the claims 1 to 7, characterized in that an electronic control for activating said supply means (38; 52, 54) is provided and, where appropriate, functions of said device (10) are activatable via an electronic control means.

9. The setting device as set forth in any of the claims 1 to 8, characterized in that one, more or all placing functions of said device (10) are activatable by sensors.

10. The setting device as set forth in any of the claims 1 to 9, characterized in that said device (10) comprises a preferably inductive sensor (36) for sensing an advantageous placing position on a roof.

11. The setting device as set forth in any of the claims 1 to 10, characterized in that a preferably acoustical or optical signal transmitter is arranged, said signal transmitter outputting a signal in response to a distance travelled by said device (10) and said signal transmitter being preferably connected to a transport reel (28) of said device (10) for sensing the distance covered via the number of revolutions of said transport reel (28).

12. The setting device as set forth in any of the claims 1 to 11, characterized in that between said storage (20) for said retention elements and said supply duct (58) a singling means (80) is provided which is preferably electronically controlled and where appropriate comprises a parting means (82a, 82b) preferably pretensioned in the direction of said retention element (100), by means of which said retention elements (100) in said storage (20) are separable from each other, said parting means (82a, 82b) comprising preferably at least one parting portion (83a, 83b) engaging between said retention elements (100) or fastener plates to lift them off from each other.

13. The setting device as set forth in claim 12, characterized in that said singling means (80) comprises a feeder means (90) for feeding a single retention element (100) from a position below said storage (20) into a position on or above said supply duct (58).

## Revendications

1. Dispositif de pose, pour la pose de dispositifs de retenue, de préférence de dispositifs de retenue en forme de plaque, en particulier de plaques de fixation pour la fixation de bandes d'étanchéité de toitures sur la surface d'une toiture, comportant
a) au moins un magasin (22, 32) pour les dispositifs de retenue et pour des dispositifs de fixation en forme de vis,
b) au moins un dispositif d'amenée (38; 52, 54) pour les dispositifs de retenue et les dispositifs de fixation,
c) des pistes d'amenée (40, 58) pour les dispositifs de fixation et les dispositifs de retenue, et
d) un dispositif d'insertion, en particulier d'un dispositif de vissage pour la fixation du dispositif de retenue au moyen des dispositifs de fixation,
caractérisé par les caractéristiques suivantes:
e) il comporte au moins un détecteur électrique ou magnétique, de préférence un commutateur magnétique, qui est configuré pour commander le dispositif d'amenée (52, 54) du dispositif de retenue de manière synchronisée par rapport au dispositif d'amenée (38) des dispositifs de fixation en forme de vis,
f) il comporte au moins un dispositif d'avancement (52; 112, 124), pour déplacer des dispositifs de retenue hors du magasin (20) le long de la piste d'amenée (58), jusque dans une position de pose (50, 50a) ou au-dessus de celle-ci, et
g) la piste d'amenée est configurée comme canal d'amenée (58) pour les dispositifs de retenue ou les plaques de fixation, et s'étend essentiellement en ligne droite ou horizontalement,
h) et le dispositif de pose est commandé électroniquement.

2. Dispositif de pose selon la revendication 1, caractérisé en ce que le ou les dispositifs d'avancement (26, 52, 58) peuvent être déplacés par l'intermédiaire d'un moteur électromagnétique, et en particulier d'un moteur pas-à-pas à cinq phases (26).

3. Dispositif de pose selon l'une des revendications 1 ou 2, caractérisé en ce que le ou les dispositifs d'avancement (26, 52, 58) présentent des dispositifs à aimant ou électroaimant avec lesquels les dispositifs de retenue peuvent être immobilisés de manière réversible ou transportés dans une position de pose.

4. Dispositif de pose selon l'une des revendications 1 à 3, caractérisé en ce que la position de pose (50, 50a) est disposée à proximité du bord d'une plaque de base (30) du dispositif (10).

5. Dispositif de pose selon l'une des revendications 1 à 4, caractérisé en ce que les dispositifs de fixation, en particulier des vis, peuvent être apportés, de préférence par une courroie, depuis le magasin (32) et le long du canal d'amenée, de préférence par traction de la courroie vers l'avant.

6. Dispositif de pose selon la revendication 5, caractérisé en ce que les vis ou chaque vis peuvent être enlevées de la courroie au moyen de dispositifs d'avancement, et en particulier de dispositifs (38) d'enlèvement des vis une par une, et peuvent être introduites dans un canal essentiellement vertical qui débouche au-dessus de la position de pose (50, 50a), le dispositif de fixation, en particulier une visseuse électrique, agissant sur le dispositif de fixation ou sur les vis, de préférence à travers le canal vertical.

7. Dispositif de pose selon l'une des revendications 1 à 6, caractérisé en ce que le dispositif (10) peut être réglé sur différentes longueurs des dispositifs de fixation ou vis, et en particulier la profondeur de vissage est réglable.

8. Dispositif de pose selon l'une des revendications 1 à 7, caractérisé en ce qu'il est prévu une commande électronique pour le déclenchement du ou des dispositifs d'amenée (38; 52, 54), et éventuellement des fonctions du dispositif (10) peuvent être déclenchées par l'intermédiaire d'un dispositif de commande électronique.

9. Dispositif de pose selon l'une des revendications 1 à 8, caractérisé en ce que des fonctions individuelles de pose, plusieurs de ces fonctions ou toutes ces fonctions du dispositif (10) peuvent être déclenchées par des détecteurs.

10. Dispositif de pose selon l'une des revendications 1 à 9, caractérisé en ce que le dispositif (10) présente un détecteur (36), de préférence à induction, pour déterminer une position avantageuse de pose sur une toiture.

11. Dispositif de pose selon l'une des revendications 1 à 10, caractérisé en ce qu'il est prévu un émetteur de signaux, de préférence acoustiques ou optiques, qui délivre un signal sous la dépendance d'un chemin parcouru par le dispositif (10), et l'émetteur de signaux est de préférence relié à un rouleau de transport (28) du dispositif (10), qui sert à déterminer le chemin parcouru à partir du nombre de tours du rouleau de transport (28).

12. Dispositif de pose selon l'une des revendications 1 à 11, caractérisé en ce qu'entre le magasin (20) pour les dispositifs de retenue et le canal d'amenée (58), il est prévu un dispositif (80) d'enlèvement un à un des dispositifs de retenue, qui est de préférence commandé électroniquement et qui présente éventuellement un dispositif de séparation (82a, 82b) précontraint (84) en direction du dispositif de retenue (100), et par lequel les dispositifs de retenue (100) qui se trouvent dans le magasin (20) peuvent être séparés l'un de l'autre, et le dispositif de séparation (82a, 82b) présente de préférence au moins une partie de séparation (83a, 83b) qui s'engage entre les dispositifs de retenue (100) ou les plaques de fixation pour les séparer mutuellement.

13. Dispositif de pose selon la revendication 12, caractérisé en ce que le dispositif (80) d'enlèvement des dispositifs de retenue un par un présente un dispositif d'avancement (90) pour transporter un dispositif de retenue (100) séparé depuis une position située en dessous du magasin (20) jusque dans une position située sur le canal d'amenée (58) ou au-dessus de celui-ci.
